# EUROPÄISCHE PATENTSCHRIFT

(11) **EP 3 123 049 B1**
(45) Veröffentlichungstag und Bekanntmachung des Hinweises auf die Patenterteilung: **06.05.2020**
(21) Anmeldenummer: 15715675.3
(22) Anmeldetag: 12.03.2015
(51) Int. Cl.: F16D 13/75, F16D 21/06

(54) **REIBUNGSKUPPLUNGSEINRICHTUNG**
FRICTION CLUTCH DEVICE
SYSTÈME D'EMBRAYAGE À FRICTION

(30) Priorität: 26.03.2014 DE 102014205573
(43) Veröffentlichungstag der Anmeldung: 01.02.2017
(73) Patentinhaber: Schaeffler Technologies AG & Co. KG, 91074 Herzogenaurach (DE)
(72) Erfinder: KELLER, Aurelie, F-67240 Oberhoffen Sur Moder (FR); AGNER, Ivo, 77815 Bühl (DE); BAUMANN, Michael, 77886 Lauf (DE); TRINKENSCHUH, Andreas, 77815 Bühl (DE)
(86) Internationale Anmeldenummer: PCT/DE2015/200150
(87) Internationale Veröffentlichungsnummer: WO 2015/144161

(56) Entgegenhaltungen:
- EP-A1- 1 512 881
- WO-A1-2011/076170
- DE-A1-102010 035 120

## Beschreibung

Die Erfindung betrifft eine Reibungskupplungseinrichtung mit mindestens einer Druckplatte und einer Gegendruckplatte, und mit mindestens einer Blattfedereinrichtung, die mit einer Einstelleinrichtung kombiniert ist. Die Erfindung betrifft des Weiteren ein Verfahren zum Einstellen einer Blattfederkraft und/oder zum Positionieren von Drucktöpfen in axialer Richtung bei einer derartigen Reibungskupplungseinrichtung.

Aus der internationalen Veröffentlichung WO 2008/077377 A1 ist eine Reibungskupplungseinrichtung mit einer Zentralplatte bekannt, die drehfest mit einem Gehäuse verbunden und relativ zu dem Gehäuse mit Hilfe einer Betätigungseinrichtung zum Öffnen und Schließen der Reibungskupplungseinrichtung axial begrenzt verlagerbar ist, und mit einer Verschleißkompensationseinrichtung, wobei in die Reibungskupplungseinrichtung eine Einstelleinrichtung integriert ist, durch die eine resultierende Sensorfederkraft, die teilweise von der Verschleißkompensationseinrichtung ausgeübt wird, auf einen definierten Wert einstellbar ist.

Aus der EP 1 512 881 A1 ist eine Doppelkupplung mit einer Nachstelleinrichtung bekannt. Über eine Steuerungssoftware kann eine Verschleißnachstellung gezielt ausgelöst werden. Durch eine Anfangseinstellung eines Verschleißstellringes können hier schon einige Fertigungstoleranzen der Doppelkupplung ausgeglichen werden.

Die DE 10 2010 035 120 A1 zeigt eine Reibungskupplung mit Nachstellvorrichtung und Transportsicherung. Über die Nachstellvorrichtung wäre ein Toleranzausgleich der Reibungskupplung auch in ihrer Einbaulage möglich.

Aufgabe der Erfindung ist es, Krafttoleranzen in einer Einbaulage einer Reibungskupplungseinrichtung mit mindestens einer Druckplatte und einer Gegendruckplatte, und mit mindestens einer Blattfedereinrichtung, die mit einer Einstelleinrichtung kombiniert ist, zu reduzieren.

Die Aufgabe ist bei einer Reibungskupplungseinrichtung mit mindestens einer Druckplatte und einer Gegendruckplatte, und mit mindestens einer Blattfedereinrichtung, die mit einer Einstelleinrichtung kombiniert ist, dadurch gelöst, dass die Einstelleinrichtung als Toleranzausgleichseinrichtung ausgeführt ist, die einen Toleranzausgleich der Reibungskupplungseinrichtung in ihrer Einbaulage ermöglicht. Dabei ist die Reibungskupplungseinrichtung vorzugsweise als direkt betätigte Reibungskupplungseinrichtung ausgeführt, zum Beispiel mit einem Drucktopf oder mit einzelnen Hebeln, die eine Übersetzung von eins zu eins haben. Als direkt betätigte Reibungskupplungseinrichtung wird eine Kupplung bezeichnet, bei welcher Betätigungskräfte, die zum Beispiel an Betätigungslagern eingeleitet werden, über mindestens einen Drucktopf oder einzelne Hebel und eine Druckplatte auf Kupplungsbeläge einer Kupplungsscheibe übertragen werden. Durch die direkte Betätigung kann vorteilhaft eine Hebelfeder entfallen, wie sie bei herkömmlichen Kupplungen zum Einleiten der Betätigungskraft in die Kupplung verwendet wird. Darüber hinaus ist die erfindungsgemäße direkt betätigte Reibungskupplungseinrichtung vorteilhaft ohne Verschleißausgleich ausgeführt. Ein bei herkömmlichen Kupplungen verwendeter Sensierring kann bei der erfindungsgemäßen direkt betätigten Reibungskupplungseinrichtung vorteilhaft entfallen.

Ein bevorzugtes Ausführungsbeispiel der Reibungskupplungseinrichtung ist dadurch gekennzeichnet, dass die Reibungskupplungseinrichtung als Doppelkupplung mit zwei Druckplatten und mindestens einer Gegendruckplatte ausgeführt ist. Die erfindungsgemäße Reibungskupplungseinrichtung kann drei Platten umfassen, also zwei Druckplatten und eine Gegendruckplatte, die auch als Zentralplatte bezeichnet wird. Die erfindungsgemäße Reibungskupplungseinrichtung kann aber auch vier Platten umfassen, also zwei Druckplatten und zwei Gegendruckplatten. Durch die direkte Betätigung kann die Doppelkupplung mit den vier Platten funktionell sehr einfach gehalten werden.

Ein weiteres bevorzugtes Ausführungsbeispiel der Reibungskupplungseinrichtung ist dadurch gekennzeichnet, dass die Blattfedereinrichtung mindestens eine Blattfeder umfasst, die an einer ersten Befestigungsstelle an der Druckplatte/Gegendruckplatte und an einer zweiten Befestigungsstelle unter Zwischenschaltung mindestens eines plastisch verformbaren Einstellstücks an der Gegendruckplatte/Druckplatte befestigt ist. Das Einstellstück ist vorzugsweise aus einem relativ weichen Material gebildet, um die plastische Verformbarkeit darzustellen. Dabei ist das Einstellstück aber so stabil ausgeführt, dass es seine plastisch verformte Gestalt nach der plastischen Verformung im Betrieb der Reibungskupplungseinrichtung beibehält.

In einer ersten erfindungsgemäßen Alternative ist die Reibungskupplungseinrichtung dadurch gekennzeichnet, dass erste Einstellstücke einer ersten Kupplung und zweite Einstellstücke einer zweiten Kupplung so angeordnet sind, dass sich die ersten und zweiten Einstellstücke, insbesondere beim Einstellen der Blattfederkraft, in entgegengesetzten Richtungen verformen. Dadurch wird auf einfache Art und Weise eine sehr kompakte Bauweise der Reibungskupplungseinrichtung ermöglicht.

In einer alternativen, nicht erfindungsgemäßen Reibungskupplungseinrichtung kann es vorgesehen sein, dass Shimscheiben zwischen Betätigungseinrichtungen und Drucktöpfen der Reibungskupplungseinrichtung angeordnet sind. Bei den Betätigungseinrichtungen handelt es sich vorzugsweise um Betätigungslager. Eine Betätigungskraft wird von den Betätigungseinrichtungen über die Drucktöpfe direkt auf die Druckplatten der Reibungskupplungseinrichtung übertragen. Mit Hilfe der Shimscheiben kann die Position der Drucktöpfe in axialer Richtung eingestellt werden. Der Begriff axial bezieht sich auf eine Drehachse der Reibungskupplungseinrichtung. Axial bedeutet in Richtung oder parallel zur Drehachse der Reibungskupplungseinrichtung. Der Begriff Shim kommt aus dem Englischen und bedeutet "durch Beilagen ausgleichen".

Eine zweite alternative, erfindungsgemäße Reibungskupplungseinrichtung ist dadurch gekennzeichnet, dass mehrere Einstelleinheiten, die jeweils mindestens eine Blattfedereinrichtung und ein Einstellstück umfassen, in Umfangsrichtung verteilt angeordnet sind. Dabei sind vorteilhaft Einstelleinheiten der ersten und der zweiten Kupplung in Umfangsrichtung in gleichen Winkelbereichen angeordnet. Die Einstelleinheiten der ersten und der zweiten Kupplung sind in Umfangsrichtung vorteilhaft gleichmäßig verteilt angeordnet.

Ein weiteres bevorzugtes Ausführungsbeispiel der Reibungskupplungseinrichtung ist dadurch gekennzeichnet, dass die Einstelleinheiten radial außerhalb von Reibflächenbereichen angeordnet sind. Das hat sich im Hinblick auf die Funktion und den zur Verfügung stehenden Bauraum bei im Rahmen der vorliegenden Erfindung durchgeführten Untersuchungen und Versuchen mit der Reibungskupplungseinrichtung als vorteilhaft erwiesen.

Bei einem Verfahren zum Einstellen einer Blattfederkraft bei einer vorab beschriebenen Reibungskupplungseinrichtung ist die oben angegebene Aufgabe alternativ oder zusätzlich dadurch gelöst, dass das Einstellstück definiert plastisch verformt wird, um die Blattfederkraft einzustellen. Als Blattfederkraft wird die Kraft bezeichnet, die im eingebauten Zustand der Reibungskupplungseinrichtung von der Blattfedereinrichtung bewirkt beziehungsweise erzeugt wird. Die Reibungskupplungseinrichtung wird in eine Einbaulage gebracht, in welcher ein fixer Lüftweg vorgegeben ist, bevor die Blattfederkraft gemessen und durch definierte plastische Verformung des Einstellstücks auf ein Normmaß eingestellt wird. Daraus ergibt sich eine Veränderung einer Vorspannkraft von Blattfedern der Blattfedereinrichtung.

Die oben angegebene Aufgabe ist bei einem Verfahren zum Positionieren von Drucktöpfen in axialer Richtung bei einer vorab beschriebenen Reibungskupplungseinrichtung, insbesondere gemäß einem vorab beschriebenen Verfahren, alternativ oder zusätzlich dadurch gelöst, dass das Einstellstück bei kraftfreier oder entspannter Reibungskupplungseinrichtung definiert plastisch verformt wird, um einen Drucktopf in einer Einbaulage in axialer Richtung zu positionieren. Dadurch wird auf einfache Art und Weise ein Richten der Drucktöpfe auf eine gezielte Einbauhöhe ermöglicht.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine direkt betätigte Reibungskupplungseinrichtung mit einer zentralen Betätigungseinrichtung im Längsschnitt;
Figur 2 eine perspektivische Darstellung der Reibungskupplungseinrichtung mit Blick auf eine Getriebeseite;
Figur 3 die Reibungskupplungseinrichtung aus Figur 2 mit Blick auf eine Motorseite;
Figur 4 eine Frontansicht der Reibungskupplungseinrichtung aus den Figuren 2 und 3;
Figur 5 eine Übersicht der Reibungskupplungseinrichtung aus den Figuren 2 bis 4;
Figur 6 eine vereinfachte Darstellung von zwei Platten mit einer Blattfeder und einem Einstellstück im Ausgangszustand;
Figur 7 die Platten aus Figur 6 mit der Blattfeder und dem Einzelstück im plastisch verformten Zustand;
Figur 8 eine vereinfachte Darstellung einer kompakten Anordnung von zwei Einstelleinheiten und
Figur 9 eine alternative Anordnung zu Figur 8, wobei zwei Einstellstücke von zwei Teilkupplungen in derselben Richtung verformt werden können.

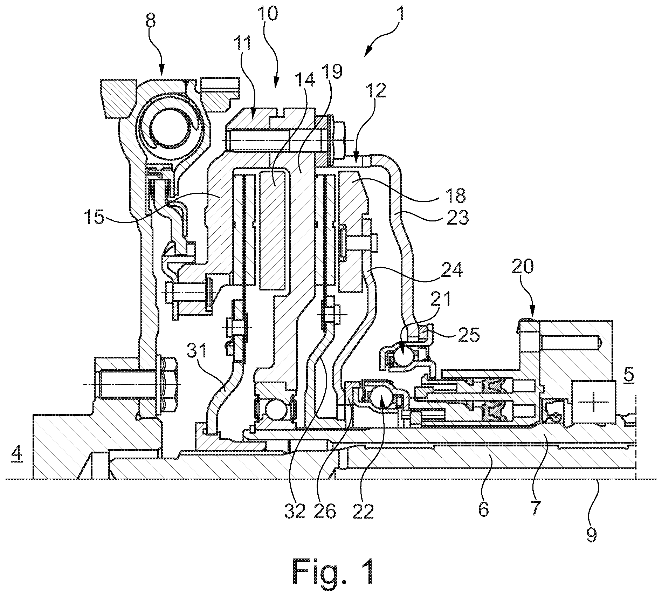

In Figur 1 ist eine Reibungskupplungseinrichtung 1 mit einer Motorseite 4 und einer Getriebeseite 5 im Längsschnitt dargestellt. Von der Getriebeseite 5 erstrecken sich eine erste Getriebewelle 6 und eine zweite Getriebewelle 7 in die Reibungskupplungseinrichtung 1.

Auf der Motorseite 4 ist eine Drehschwingungsdämpfungseinrichtung 8 in Form eines Zweimassenschwungrads angeordnet. Die Drehschwingungsdämpfungseinrichtung 8 und die beiden Getriebewellen 6 und 7 haben eine gemeinsame Drehachse 9. Die zweite Getriebewelle 7 ist als Hohlwelle ausgeführt, in welcher die erste Getriebewelle 6 drehbar angeordnet ist.

Die Reibungskupplungseinrichtung 1 umfasst eine Doppelkupplung 10 mit einer ersten Kupplung 11 und einer zweiten Kupplung 12. Die erste Kupplung 11 umfasst eine erste Druckplatte 14 und eine erste Gegendruckplatte 15. Die zweite Kupplung 12 umfasst eine zweite Druckplatte 18 und eine zweite Gegendruckplatte 19.

Die beiden Gegendruckplatten 15 und 19 sind fest miteinander verbunden. Die erste Druckplatte 14 ist relativ zu der ersten Gegendruckplatte 15 in axialer Richtung begrenzt verlagerbar. Analog ist die zweite Druckplatte 18 relativ zu der zweiten Gegendruckplatte 19 in axialer Richtung begrenzt verlagerbar.

Zur Betätigung der Doppelkupplung 10 dient ein Doppelzentraleinrücker 20 mit einem ersten Betätigungslager 21 und einem zweiten Betätigungslager 22. Das erste Betätigungslager 21 ist über einen ersten Drucktopf 23 mit der ersten Druckplatte 14 gekoppelt. Das zweite Betätigungslager 22 ist über einen zweiten Drucktopf 24 mit der zweiten Druckplatte 18 gekoppelt.

Über die beiden Drucktöpfe 23 und 24 werden die Druckplatten 14, 18 der beiden Kupplungen 11, 12 der Doppelkupplung 10 direkt betätigt. Eine erste Shimscheibe 25 ist zu Ausgleichs- und/oder Einstellzwecken zwischen dem ersten Drucktopf 23 und dem ersten Betätigungslager 21 angeordnet. Eine zweite Shimscheibe 26 ist zum gleichen Zweck zwischen dem zweiten Drucktopf 24 und dem zweiten Betätigungslager 22 angeordnet.

Die erste Kupplung 11 der Doppelkupplung 10 umfasst eine erste Kupplungsscheibe 31 mit Reibbelägen, die zwischen der ersten Druckplatte 14 und der ersten Gegendruckplatte 15 einklemmbar sind. Die zweite Kupplung 12 der Doppelkupplung 10 umfasst eine zweite Kupplungsscheibe 32 mit Reibbelägen, die zwischen der zweiten Druckplatte 18 und der zweiten Gegendruckplatte 19 einklemmbar sind.

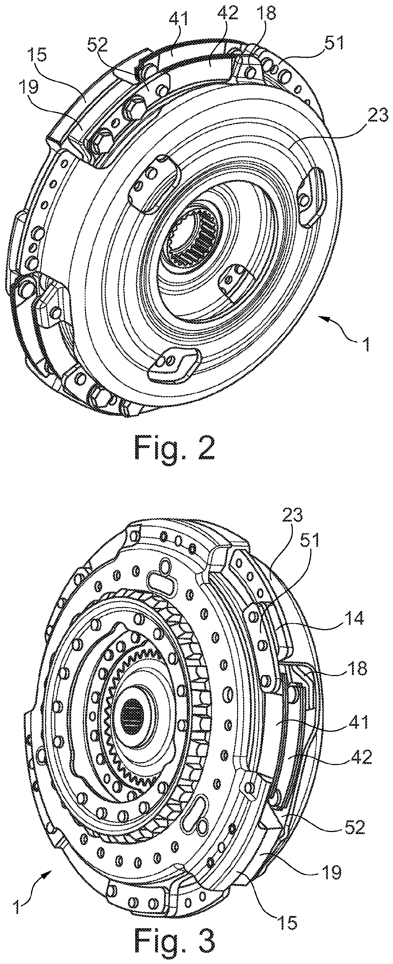

Die Betätigung der beiden Kupplungen 11, 12 der Doppelkupplung 10 erfolgt druckgeregelt über den Doppelzentraleinrücker 20. Um eine möglichst genaue Kupplungsregelung sicherzustellen, ist ein relativ großer Kraftgradient bei der Kupplungsrückstellkraft notwendig. Die Kupplungsrückstellkraft wird von Blattfedereinrichtungen (41, 42 in den Figuren 2 bis 5) aufgebracht, die entsprechend vorgespannt sind.

Ein großer Steigungsgradient der Blattfederkraft führt, insbesondere mit vorgegebenen geometrischen Einzeltoleranzen, zu einer relativ großen Betätigungskraft und einer dementsprechend hohen Blattfederbelastung. Außerdem ist der Betätigungsdruck begrenzt und reicht gegebenenfalls für die volle Momentenübertragung nicht aus.

Die Einbaulage der Reibungskupplungseinrichtung 1 ist bei einem fixen Lüftweg, der vorzugsweise in Millimetern definiert wird, festgelegt. Je nach Einzelteilgeometrie ergibt sich eine unterschiedliche Vorspannhöhe für die Blattfedereinrichtung in Einbaulage und somit auch eine unterschiedliche Einbaukraft der Reibungskupplungseinrichtung 1. Zur Darstellung eines Toleranzausgleichs für die Kraft in Einbaulage der Reibungskupplungseinrichtung 1 sind die Blattfedereinrichtungen 41, 42 mit Einstellstücken 51, 52 kombiniert.

In den Figuren 2 bis 5 ist die Reibungskupplungseinrichtung 1 mit einer ersten Blattfedereinrichtung 41, einer zweiten Blattfedereinrichtung 42 sowie einem ersten Einstellstück 51 und einem zweiten Einstellstück 52 in verschiedenen Ansichten dargestellt. Die beiden Blattfedereinrichtungen 41 und 42 umfassen vorzugsweise jeweils ein Blattfedernpaket.

Die erste Blattfedereinrichtung 41 ist mit einem Ende an der ersten Gegendruckplatte 15 befestigt. Mit ihrem anderen Ende ist die erste Blattfedereinrichtung 41 an dem ersten Einstellstück 51 befestigt. Das erste Einstellstück 51 ist mit einem der ersten Blattfedereinrichtung 41 abgewandten Ende an der ersten Druckplatte 14 befestigt.

Die zweite Blattfedereinrichtung 42 ist mit einem Ende an der zweiten Gegendruckplatte 19 befestigt. Mit ihrem anderen Ende ist die zweite Blattfedereinrichtung 42 an dem zweiten Einstellstück 52 befestigt. Das zweite Einstellstück 52 ist mit einem der zweiten Blattfedereinrichtung 42 abgewandten Ende an der zweiten Gegendruckplatte 19 befestigt.

Die Einstellstücke 51, 52 sind aus einem relativ weichen, dadurch plastisch verformbaren Material gebildet. Im Zusammenbau der Reibungskupplungseinrichtung 1 werden die Einstellstücke 51, 52 plastisch verformt und verändern dadurch die Vorspannhöhe der Blattfedern der Blattfedereinrichtungen 41, 42.

Als Vorspannhöhe wird die vorgespannte Ausdehnung der Blattfedern der Blattfedereinrichtungen 41, 42 in axialer Richtung bezeichnet. Aus der Veränderung der Vorspannhöhe der Blattfedern ergibt sich eine Veränderung der Vorspannkraft der Blattfedern der Blattfedereinrichtungen 41, 42. Dadurch kann die Blattfederkraft in der Einbaulage der Reibungskupplungseinrichtung 1 auf einen Soll-Nominalwert eingestellt werden.

Die Einbaulage der Reibungskupplungseinrichtung 1 ist bei fixem Lüftweg definiert. Je nach Bauteiltoleranzen ergibt sich dann in Einbaulage eine unterschiedliche Drucktopfhöhe zum Betätigungslager 21, 22. Die variable Drucktopfhöhe wird mit den Shimscheiben 25, 26 kompensiert. Jeder Drucktopfhöhe wird eine Shimkorrektur zugeordnet. Im Getriebeaufbau wird eine Shimscheibe 25, 26 zwischen dem Drucktopf 23, 24 und dem Betätigungslager 21, 22 angeordnet, welche die Ist-Höhe des Betätigungssystems und die Ist-Höhe des Drucktopfs 23, 24 ausgleicht.

Die Blattfedereinrichtungen 41, 42 und die Einstellstücke 51, 52 stellen eine Einstelleinheit dar, die radial außerhalb eines Reibflächenbereichs der Reibungskupplungseinrichtung 1 angeordnet ist. In dem Reibflächenbereich kommen die Reibbeläge der Kupplungsscheiben 31, 32 reibschlüssig mit den Druckplatten 14, 18 und den Gegendruckplatten 15, 19 in Kontakt.

Zur Anbindung der Blattfedereinrichtungen 41, 42 und der Einstellstücke 51, 52 dienen Nocken, die sich von den Platten 14, 15, 18, 19 radial nach außen erstrecken.

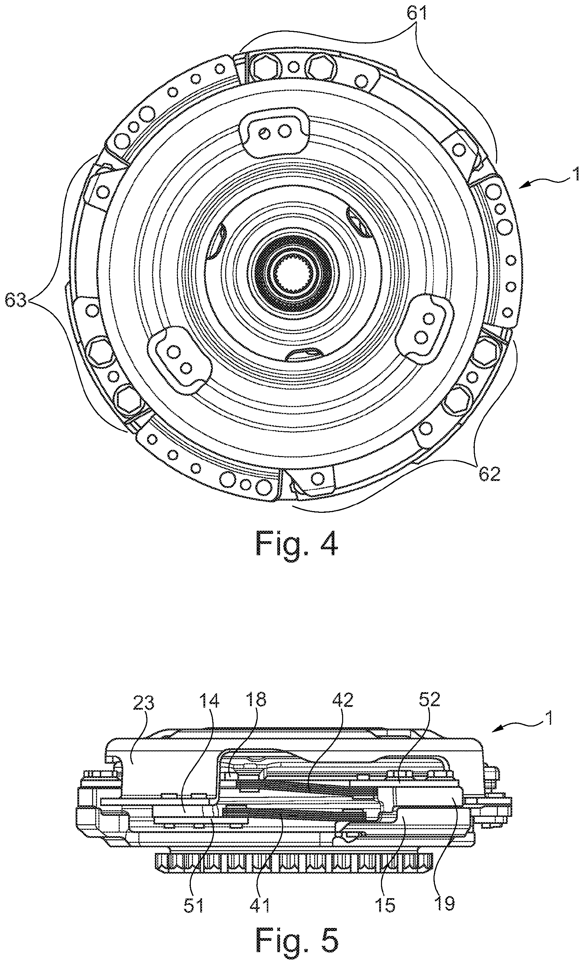

In Figur 4 sieht man, dass insgesamt drei Einstelleinheiten 61, 62, 63 gleichmäßig über einen äußeren Umfang der Reibungskupplungseinrichtung 1 verteilt sind. Je nach Bauraum können die Einstelleinheiten 61, 62, 63 auch radial innerhalb des Reibflächenbereichs angeordnet werden.

Die Einzelteilgeometrien, die einen Einfluss auf die Vorspannhöhe der Blattfedern haben, werden vorteilhaft so ausgelegt, dass die Vorspannung der Blattfedereinrichtungen 41, 42 in Einbaulage im Zusammenbau zu einer hohen Blattfederkraft führen. Die Kupplungskraft der Reibungskupplungseinrichtung 1 ist dann in Einbaulage immer größer als das Nominalmaß und die Kraft muss in der gleichen Richtung korrigiert werden. Alternativ kann der Aufbau so ausgelegt werden, dass die Blattfedervorspannung erst einmal zu einer niedrigeren Kraft führt, die im Einstellprozess oder Richtprozess dann erhöht werden müsste.

Im Zusammenbau wird die Reibungskupplungseinrichtung 1 auf einen fixen Lüftweg, der die Einbaulage darstellt, positioniert. Die Kupplungskraft wird in dieser Position gemessen und das Kraftdelta zu einer Nominalkraft ausgewertet. Das Kraftdelta wird während eines Richtprozesses der Einstellstücke 51, 52 korrigiert. Im Unterschied zu bekannten Richtprozessen wird der Lüftweg konstant eingestellt und die Einbaukraft, die sich ergibt, korrigiert.

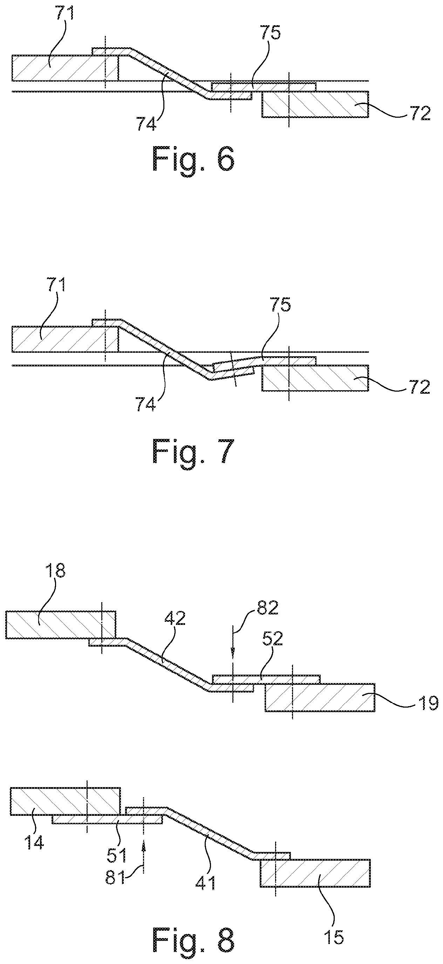

In den Figuren 6 und 7 sind jeweils zwei Platten 71, 72 im Schnitt vereinfacht dargestellt. Bei der Anpressplatte 71 handelt es sich zum Beispiel um eine Druckplatte oder um eine Gegendruckplatte. Analog handelt es sich bei der Platte 72 um eine Gegendruckplatte oder eine Druckplatte. Eine Blattfeder 74 ist mit einem Ende an der Platte 71 befestigt. Das andere Ende der Blattfeder 74 ist an einem Einstellstück 75 befestigt. Ein der Blattfeder 74 abgewandtes Ende des Einstellstücks 75 ist an der Platte 72 befestigt.

In Figur 6 ist das Einstellstück 75 in seinem unverformten Ausgangszustand dargestellt. In Figur 7 ist das Einstellstück 75 in einem verformten Endzustand dargestellt. Durch die Verformung des Einstellstücks 75 in Figur 7 verändert sich die Vorspannhöhe der Blattfeder 74. Daraus ergibt sich eine Veränderung der Vorspannkraft der Blattfeder 74. Somit kann die Kraft in Einbaulage auf einen Soll-Nominalwert eingestellt werden.

In Figur 8 ist die zweite Blattfedereinrichtung 42 mit ihrem in Figur 8 linken Ende an der zweiten Druckplatte 18 befestigt. Mit ihrem in Figur 8 rechten Ende ist die zweite Blattfedereinrichtung 42 an dem zweiten Einstellstück 52 befestigt, das wiederum an der zweiten Gegendruckplatte 19 befestigt ist.

Die erste Blattfedereinrichtung 41 ist mit ihrem in Figur 8 rechten Ende an der ersten Gegendruckplatte 15 befestigt. Mit ihrem anderen Ende ist die erste Blattfedereinrichtung 41 an dem ersten Einstellstück 51 befestigt, das wiederum an der ersten Druckplatte 14 befestigt ist. Durch einen Pfeil 81 ist die Richtung der Einstellstückverformung des ersten Einstellstücks 51 angedeutet. Durch einen Pfeil 82 ist die Richtung der Einstellstückverformung des zweiten Einstellstücks 52 angedeutet, die der Richtung 81 entgegengesetzt ist.

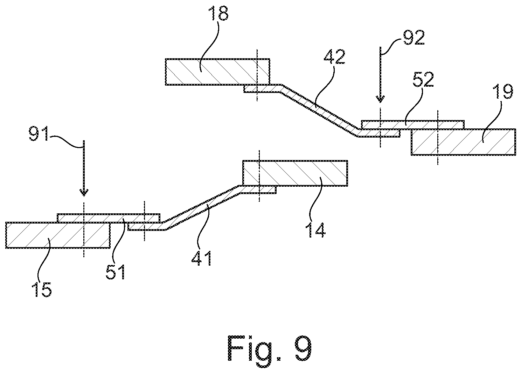

In Figur 9 ist gegenüber der Darstellung der Figur 8 die erste Blattfedereinrichtung 41 mit dem ersten Einstellstück 51 und den Platten 14 und 15 so angeordnet, dass die Richtungen 91, 92 der Einstellstückverformungen gleich sind. Die Richtungen der Einstellstückverformungen sind in Figur 9 durch zwei Pfeile 91, 92 angedeutet, die beide nach unten gerichtet sind.

### Bezugszeichenliste

1. Reibungskupplungseinrichtung
2.
3.
4. Motorseite
5. Getriebeseite
6. erste Getriebewelle
7. zweite Getriebewelle
8. Drehschwingungsdämpfereinrichtung
9. Drehachse
10. Doppelkupplung
11. erste Kupplung
12. zweite Kupplung
13.
14. erste Druckplatte
15. erste Gegendruckplatte
16.
17.
18. zweite Druckplatte
19. zweite Gegendruckplatte
20. Doppelzentraleinrücker
21. erstes Betätigungslager
22. zweites Betätigungslager
23. erster Drucktopf
24. zweiter Drucktopf
25. erste Shimscheibe
26. zweite Shimscheibe
27.
28.
29.
30.
31. erste Kupplungsscheibe
32. zweite Kupplungsscheibe
33.
34.
35.
36.
37.
38.
39.
40.
41. erste Blattfedereinrichtung
42. zweite Blattfedereinrichtung
43.
44.
45.
46.
47.
48.
49.
50.
51. erstes Einstellstück
52. zweites Einstellstück
53.
54.
55.
56.
57.
58.
59.
60.
61. Einstelleinheit
62. Einstelleinheit
63. Einstelleinheit
64.
65.
66.
67.
68.
69.
70.
71. Platte
72. Platte
73.
74. Blattfeder
75. Einstellstück
76.
77.
78.
79.
80.
81. Pfeil
82. Pfeil
83.
84.
85.
86.
87.
88.
89.
90.
91. Pfeil
92. Pfeil

## Patentansprüche

1. Reibungskupplungseinrichtung (1) mit mindestens einer Druckplatte (14, 18) und einer Gegendruckplatte (15, 19), und mit mindestens einer Blattfedereinrichtung (41,42), die mit einer Einstelleinrichtung kombiniert ist, wobei die Einstelleinrichtung als Toleranzausgleichseinrichtung ausgeführt ist, die einen Toleranzausgleich der Reibungskupplungseinrichtung (1) in ihrer Einbaulage ermöglicht, **dadurch gekennzeichnet, dass** erste Einstellstücke (51) einer ersten Kupplung (11) und zweite Einstellstücke (52) einer zweiten Kupplung (12) so angeordnet sind, dass sich die ersten und zweiten Einstellstücke (51,52), insbesondere beim Einstellen der Blattfederkraft, in entgegengesetzten Richtungen (81,82) verformen oder dass mehrere Einstelleinheiten (61,62,63), die jeweils mindestens eine Blattfedereinrichtung (41,42) und ein Einstellstück (51,52) umfassen, in Umfangsrichtung verteilt angeordnet sind..

2. Reibungskupplungseinrichtung nach Anspruch 1, **dadurch gekennzeichnet, dass** die Reibungskupplungseinrichtung (1) als Doppelkupplung (10) mit zwei Druckplatten (14, 18) und mindestens einer Gegendruckplatte (15,19) ausgeführt ist.

3. Reibungskupplungseinrichtung nach einem der vorhergehenden Ansprüche, **dadurch gekennzeichnet, dass** die Blattfedereinrichtung (41,42) mindestens eine Blattfeder umfasst, die an einer ersten Befestigungsstelle an der Druckplatte (14,18)/Gegendruckplatte (15,19) und an einer zweiten Befestigungsstelle unter Zwischenschaltung mindestens eines plastisch verformbaren Einstellstücks (51,52) an der Gegendruckplatte (15,19)/Druckplatte (14,18) befestigt ist

4. Reibungskupplungseinrichtung nach Anspruch 1, **dadurch gekennzeichnet, dass** die Einstelleinheiten (61,62,63) radial außerhalb von Reibflächenbereichen angeordnet sind.

5. Verfahren zum Einstellen einer Blattfederkraft bei einer Reibungskupplungseinrichtung (1) nach einem der Ansprüche 1 bis 4, wobei das Einstellstück (51,52) definiert plastisch verformt wird, um die Blattfederkraft einzustellen, **dadurch gekennzeichnet, dass** die Reibungskupplungseinrichtung (1) in eine Einbaulage, in welcher ein fixer Lüftweg vorgegeben ist, gebracht wird, bevor die Blattfederkraft gemessen und durch definierte plastische Verformung des Einstellstücks (51,52) auf ein Normmaß eingestellt wird, oder dass das Einstellstück (51,52) bei kraftfreier oder entspannter Reibungskupplungseinrichtung (1) definiert plastisch verformt wird, um einen Drucktopf (23,24) in einer Einbaulage in axialer Richtung zu positionieren.

## Claims

1. A friction clutch device (1) having at least one pressure plate (14, 18) and a counter-pressure plate (15, 19), and at least one leaf spring device (41, 42) combined with an adjustment device, the adjustment device being designed as a tolerance compensation device, which allows a tolerance compensation of the friction clutch device (1) in the installed position thereof, **characterised in that** first adjusting pieces (51) of a first clutch (11) and second adjusting pieces (52) of a second clutch (12) are arranged so that the first and second adjusting pieces (51, 52), in particular when adjusting the leaf spring force, deform in opposite directions (81, 82), or that a plurality of adjusting units (61, 62, 63) each comprising at least one leaf spring device (41, 42) and an adjusting piece (51, 52), are arranged in a circumferential direction.

2. The friction clutch device according to claim 1, **characterised in that** the friction clutch device (1) is designed as a double clutch (10) with two pressure plates (14, 18) and at least one counter-pressure plate (15, 19).

3. The friction clutch device according to one of the preceding claims, **characterised in that** the leaf spring device (41, 42) comprises at least one leaf spring which is attached to a first attachment point on the pressure plate (14, 18)/counter-pressure plate (15, 19) and to a second attachment point, with interposition of at least one plastically deformable adjusting piece (51, 52) on the counter-pressure plate (15, 19)/pressure plate (14, 18).

4. The friction clutch device according to claim 1, **characterised in that** the adjusting units (61, 62, 63) are arranged radiallyoutside of friction surface regions.

5. A method for adjusting a leaf spring force in a friction clutch device (1) according to one of claims 1 through 4, the adjusting piece (51, 52) being plastically deformed in a defined manner in order to adjust the leaf spring force, **characterised in that** the friction clutch device (1) is placed in an installed position, in which a fixed air passage is provided, before the leaf spring force is measured and adjusted by defined plastic deformation of the adjusting piece (51, 52) to a standard size, or that the adjusting piece (51, 52) with force-free or relaxed friction clutch device (1) is plastically deformed so as to position a pressure pot (23, 24) in an installed position in the axial direction.

## Revendications

1. Système d'embrayage à friction (1) comprenant au moins un plateau de pression (14, 18) et un plateau de réaction (15, 19), ainsi qu'au moins un ensemble ressort à lame (41, 42) associé à un dispositif de réglage, dans lequel le dispositif de réglage est conçu sous la forme d'un dispositif de compensation de tolérances, qui permet de compenser les tolérances du système d'embrayage à friction (1) dans sa position de montage, **caractérisé en ce que** des premières pièces de réglage (51) d'un premier embrayage (11) et des secondes pièces de réglage (52) d'un second embrayage (12) sont disposées de sorte que les premières et secondes pièces de réglage (51, 52), en particulier lors du réglage de la force du ressort à lames, se déforment dans des directions opposées (81, 82) ou **en ce que** plusieurs unités de réglage (61, 62, 63) comprenant chacune au moins un ensemble ressort à lames (41, 42) et une pièce de réglage (51, 52), sont réparties dans la direction circonférentielle.

2. Système d'embrayage à friction selon la revendication 1, **caractérisé en ce que** le système d'embrayage à friction (1) est conçu sous la forme d'un double embrayage (10) comprenant deux plateaux de pression (14, 18) et au moins un plateau de réaction (15, 19).

3. Système d'embrayage à friction selon l'une des revendications précédentes, **caractérisé en ce que** l'ensemble ressort à lames (41, 42) comprend au moins un ressort à lames qui, à un premier point de fixation sur le plateau de pression (14, 18)/réaction (15, 19) et à un second point de fixation est fixé au plateau de réaction (15,-19)/pression(14, 18) avec interposition d'au moins une pièce de réglage plastiquement déformable (51, 52).

4. Système d'embrayage à friction selon la revendication 1, **caractérisé en ce que** les unités de réglage (61, 62, 63) sont disposées radialement à l'extérieur des régions de surface de friction.

5. Procédé pour régler une force de ressort à lames dans un système d'embrayage à friction (1) selon l'une des revendications 1 à 4, dans lequel la pièce de réglage (51, 52) est déformée plastiquement d'une manière définie afin de régler la force de ressort à lames, **caractérisé en ce que** le système d'embrayage à friction (1) est disposé dans une position de montage, dans laquelle un entrefer fixe est prédéfini, avant que la force du ressort à lame ne soit mesurée et réglée par une déformation plastique définie de la pièce de réglage (51, 52) à une taille standard ou **en ce que** la pièce de réglage (51,52) est déformée plastiquement de manière définie lorsque le système d'embrayage à friction (1) est exempt de force ou détendu, pour positionner un pot de pression (23, 24) dans une position de montage dans la direction axiale.
